# EUROPEAN PATENT APPLICATION

(11) **EP 3 896 818 A1**
(43) Date of publication of application: **20.10.2021**
(21) Application number: 19904695.4
(22) Date of filing: 25.12.2019
(51) Int. Cl.: H02J 7/00, H01M 10/44, H01M 10/48

(54) **BATTERY CHARGING METHOD AND DEVICE**

(30) Priority: 27.12.2018 CN 201811619482
(71) Applicant: Huawei Technologies Co., Ltd., Shenzhen, Guangdong 518129 (CN)
(72) Inventor: LI, Liangyu, Shenzhen, Guangdong 518129 (CN); LI, Juan, Shenzhen, Guangdong 518129 (CN); WANG, Pinghua, Shenzhen, Guangdong 518129 (CN); CAO, Yong, Shenzhen, Guangdong 518129 (CN); LI, Yangxing, Shenzhen, Guangdong 518129 (CN)
(74) Representative: Kreuz, Georg Maria
(86) International application number: PCT/CN2019/128213
(87) International publication number: WO 2020/135481

(57) **Abstract**

A battery charging method is provided. In the method, a battery parameter is first obtained, where the battery parameter includes an electrode parameter of a battery. Then, the battery parameter is input into a battery model represented by an ordinary differential equation, to obtain a safe charging boundary value of the battery in n cycles, where the parameter further includes one or more of a structure parameter, a manufacturing process parameter, an electrical parameter, an electrolyte parameter, a diaphragm parameter, and a thermophysical parameter of the battery. The safe charging boundary value is a maximum charging current in which no lithium plating occurs on the battery in different states of charge SOCs and at different temperatures, where n is greater than or equal to 2 and less than or equal to N, N is a cycle life of the battery, and the n cycles refer to n cycles selected from 0 to N cycles. Finally, a maximum safe charging current value in a current quantity of cycles and in a current SOC of the battery is obtained based on the current quantity of cycles, a current temperature, the current SOC, and the safe charging boundary value of the battery.

## Description

### TECHNICAL FIELD

This application relates to the field of battery management, and in particular, to a battery charging method and apparatus.

### BACKGROUND

Currently, because of advantages such as high energy density, a long cycle life, and a low self-discharge rate, a lithium-ion battery becomes a main energy storage element of various mobile devices or terminals, and is also used as a main drive power source of an electric vehicle. However, a charging speed of the lithium-ion battery is relatively slow, and it takes several hours to charge the lithium-ion battery once. With an urgent requirement of a user for a battery life, energy density of the lithium-ion battery continuously increases, and this adds up to an increased charging time. This brings serious inconvenience to use of a mobile terminal such as a mobile phone and an electric vehicle. In view of this, fast charging performance of a lithium-ion battery of an existing mobile terminal or device has become a requirement of users of these mobile terminals or devices, and is also one of important concerns of a product manufacturer.

Currently, a constant current and constant voltage (CC-CV) charging method is widely used to charge a common lithium-ion battery. First, a constant current (CC) is used to charge the battery. When a battery voltage reaches a charging cutoff voltage, a constant voltage (CV) is used, and a charging current gradually decreases. When the battery charging current decreases to a specific value, charging ends. To implement fast charging of the lithium-ion battery, it is essential to increase a charging current. However, heat generated when the battery is being charged is approximately in a square relationship with the charging current. Consequently, a large amount of heat is generated during the fast charging of the battery, which is difficult to popularize the lithium-ion battery. In addition, higher temperature leads to more side reactions, and worse cycle life and safety of the lithium-ion battery. As the charging current of the lithium-ion battery increases, polarization of the battery is increased, resulting in lithium plating on a surface of a negative electrode. This affects performance and a lifespan of the battery, and likely causes a safety risk due to a short circuit. Therefore, when the mobile terminal and the device are manufactured to continuously increase a charging current to achieve fast charging, an impact of overcurrent charging on performance, a lifespan, safety, and

### SUMMARY

Embodiments of this application provide a battery charging method and a terminal, to set up a battery safe charging boundary with heating, a lifespan, and safety of a battery taken into consideration, and to obtain a maximum charging current within the safe charging boundary.

An aspect of the embodiments of the present invention provides a battery charging method. In the method, a battery parameter is first obtained, where the battery parameter includes an electrode parameter of a battery. Then, the battery parameter is input into a battery model represented by an ordinary differential equation, to obtain a safe charging boundary value of the battery in n cycles, where the parameter further includes one or more of a structure parameter, a manufacturing process parameter, an electrical parameter, an electrolyte parameter, a diaphragm parameter, and a thermophysical parameter of the battery. The safe charging boundary value is a maximum charging current in which no lithium plating occurs on the battery in different states of charge SOCs and at different temperatures, where n is greater than or equal to 2 and less than or equal to N, N is a cycle life of the battery, and the n cycles refer to n cycles selected from 0 to N cycles. Finally, a maximum safe charging current value in a current quantity of cycles of the battery and in a current is obtained based on the current quantity of cycles, a current temperature, the current SOC, and the safe charging boundary value of the battery. The maximum safe charging current value refers to a maximum charging current value in which no lithium plating occurs in the current quantity of cycles and in the current SOC of the battery.

In this embodiment of the present invention, a status parameter of the battery such as the current temperature, the state of charge SOC, and a quantity of cycles is monitored in real time. A corresponding boundary current is extracted from a safe charging boundary data table based on the status parameter, and an appropriate charging specification is selected based on the safe boundary current value to perform charging. This resolves a conflict among battery fast charging, battery aging, and safety, delays battery aging and improves a fast charging speed while ensuring the battery safety.

In addition, all the battery parameters may be used as an input into the lithium-ion battery model, to more comprehensively consider a battery status. In this way, a more accurate safe boundary and a more accurate safe charging current are obtained.

In a possible implementation of an aspect of the embodiments of the present invention, the battery parameter of each cycle of k cycles in the n cycles is input into a lithium-ion battery model represented by an ordinary differential equation, to obtain a safe boundary value of the battery in each cycle of the k cycles. A safe boundary value of the battery of each cycle of the n cycles constitutes the safe boundary table, and k is greater than or equal to 2 and less than or equal to n. A function is built based on the safe boundary value of the battery in the k cycles, and a safe boundary value of the battery in each cycle other than the k cycles in the n cycles is obtained based on the function. In this way, the safe boundary table is obtained. Therefore, it is not necessary to input data or parameters of each cycle of the battery into the lithium battery model to obtain a maximum safe charging current value at each battery temperature in each cycle, but results of all cycles are obtained based on results of some cycles. This greatly reduces steps and workloads of obtaining all safe charging boundary values, and effectively simplifies an operation procedure of this implementation.

For example, a battery linear attenuation function Iₛₐₜ (X, SOC, T) = a ·X + b may be obtained based on the safe boundary value of the battery in the k cycles by using an interpolation method. Then, the safe boundary value of the battery in each cycle other than the k cycles in the n cycles is obtained based on the linear attenuation function of the battery. Coefficients a and b are calculated by using the interpolation method, X is a quantity of cycles of the battery, Iₛₐₜ is a maximum charging current value in which no lithium plating occurs, and T is the temperature of the battery.

Another aspect of the embodiments of the present invention provides a terminal, including a battery, a charging circuit, and a battery management unit. The battery management unit is configured to control the charging circuit to charge the battery, and the battery management unit includes a status obtaining module, a data processing module, and a data storage module.

The data storage module is configured to store a safe charging boundary table that includes a battery parameter and a safe charging boundary value.

The status obtaining module is configured to obtain the battery parameter of the battery, a current quantity of cycles of the battery, a cycle life of the battery, and a state of charge SOC of the battery. The parameter further includes one or more of a structure parameter, a manufacturing process parameter, an electrical parameter, an electrolyte parameter, a diaphragm parameter, and a thermophysical parameter of the battery.

The data processing module is configured to obtain a safe charging boundary value of the battery in n cycles based on the battery parameter. The safe charging boundary value includes a maximum charging current in which no lithium plating occurs on the battery in different SOCs and at different temperatures, where n is greater than or equal to 02 and less than or equal to N, N is the cycle life of the battery, and the n cycles refer to n cycles selected from 0 to N cycles. Then, the data processing module obtains a maximum safe charging current in the current quantity of cycles and in a current SOC of the battery based on the current quantity of cycles, a current temperature, the current SOC, and the safe charging boundary value of the battery. The maximum safe charging current value refers to a maximum charging current value in which no lithium plating occurs in the current quantity of cycles and in the current SOC of the battery.

The status obtaining module may further include a state of charge calculation module, an aging status calculation module, and a status detection module. The status detection module is configured to detect a battery voltage, a battery charge/discharge current, and a device temperature parameter signal of the battery and the terminal device, and may store a detection result in the storage module for the data processing module to read. The state of charge calculation module is configured to estimate the current SOC of the battery by using an SOC calculation chip, and store a result in the storage module for the data processing module to read. The aging status determining module is configured to obtain the current quantity of cycles of the battery, and store a result in the data storage module for the data processing module to read.

### BRIEF DESCRIPTION OF DRAWINGS

FIG. 1 is an application scenario diagram according to an embodiment of the present invention;
FIG. 2 is a schematic diagram of a safe charging boundary according to an embodiment of the present invention;
FIG. 3 is a flowchart of a battery charging method according to an embodiment of the present invention;
FIG. 4 is a schematic diagram of an operation of calculating a safe charging boundary value of a battery in each cycle when a battery attenuation mode is non-linear according to an embodiment of the present invention;
FIG. 5 is a schematic diagram of a structure of a battery management unit of a terminal according to an embodiment of the present invention; and
FIG. 6 is another schematic diagram of a structure of a battery management unit of a terminal according to an embodiment of the present invention.

### DESCRIPTION OF EMBODIMENTS

Embodiments of this application provide a battery charging method and apparatus, to estimate a state of charge of a battery based on a battery model with higher precision. This improves accuracy of an estimated value of the state of charge of the battery.

To make a person skilled in the art understand the technical solutions in this application better, the following describes the embodiments of this application with reference to the accompanying drawings in the embodiments of this application.

The battery charging method in the embodiments of the present invention is mainly applicable to various electronic products with rechargeable batteries, and in particular, to some portable devices, for example, terminal products such as a mobile phone, a tablet computer, a notebook computer, and various wearable devices. For such a terminal that needs to be charged, a battery management unit is required to control charging and discharging of the battery, and can prevent a case such as overvoltage, overcurrent, or overcharge. Otherwise, an electrochemical cell in the battery may be damaged, and even explode.

For ease of description, an electronic product with a rechargeable battery is referred to as a terminal in the following.

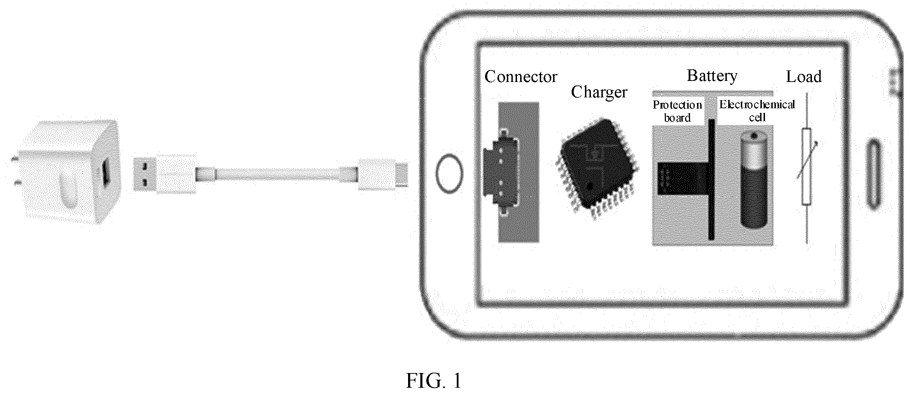

As shown in FIG. 1, the terminal using the battery charging method in the embodiments of the present invention includes a connector connected to a charger through a cable, a battery management unit (Charger), a battery, and a load. The battery includes a protection board and an electrochemical cell. The load may be any electrical component in the terminal, such as a display, a communications module, a processor, a memory, a sensor, and a speaker.

When the terminal is being charged, a current flow direction is as follows: charger → cable → connector → battery management unit → power protection apparatus → electrochemical cell. When the terminal is being discharged, the current flow direction is as follows: electrochemical cell → protection board → load. The battery management unit is mainly configured to: during charging, control a charging current and a voltage in real time based on factors such as a state of health SOH, a capacity SOC, and a temperature of the battery, to implement fast and safe charging of the battery.

As battery energy density and capacity steadily increase, a charging time is continuously prolonged when a charging speed remains unchanged, which brings inconvenience to a user of the terminal. Therefore, to ensure convenience and good charging experience of the user, the charging speed of the terminal is bound to be continuously improved in the future. However, a continuous increase in the charging speed means that the charging current is continuously increased, and consequently a safety problem is caused due to excessive battery heat generated, and the battery deteriorates due to an accelerated aging speed. The embodiments of the present invention are mainly used to strike a balance among a continuously increased charging current, battery safety, and battery aging.

Therefore, an idea of the embodiments of the present invention is how to obtain a maximum charging current and a fastest charging speed while ensuring the safety and without damaging the battery or accelerating the aging.

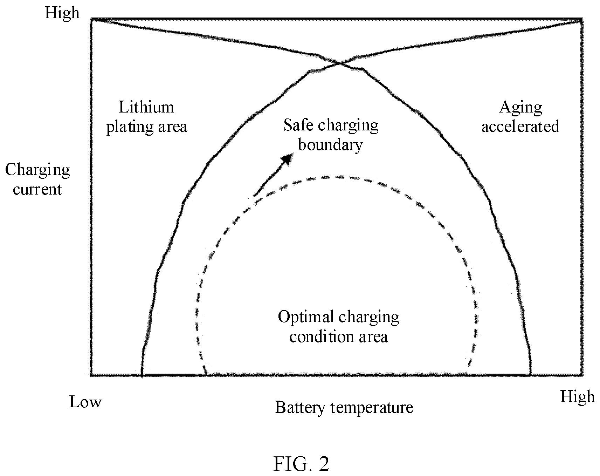

Currently, improving the energy density and fast charging capability of the battery are two main means to eliminate "battery life anxiety". However, problems of lithium-ion plating and heating that are caused by fast charging of the battery hinder wide application of the fast charging of the battery. This is mainly due to the following technical problems caused by the lithium-ion plating and the heating. As shown in FIG. 2, lithium plating further causes a decrease in the shuttleable active Li, resulting in battery capacity attenuation. The deposited Li reacts with electrolyte to form a thick solid-electrolyte interphase (Solid-Electrolyte Interphase, SEI) film, and therefore an amount of the electrolyte continuously decreases, an internal resistance of a battery increases, and battery aging is accelerated. When the lithium plating is deteriorated to a certain extent, the film is penetrated, causing a short circuit between positive and negative electrodes, or even causing battery thermal runaway. The thermal runaway causes a battery temperature to rise, resulting in more and faster side reactions in the battery at a high temperature. This accelerates battery attenuation and affects user experience.

Therefore, a maximum safe current, namely, a safe charging boundary of the battery in an entire lifespan is obtained. How to adjust and control a charging process of the battery in real time in the entire lifespan of the battery while ensuring battery safety, and charge the battery at an optimal current with consideration of both fast charging and aging of the battery becomes a key problem to be resolved in the embodiments of the present invention. The safe boundary of the maximum safe current is indicated by a safe charging boundary value. The safe charging boundary value is a maximum charging current in which no lithium plating occurs on the battery in different states of charge and at different temperatures.

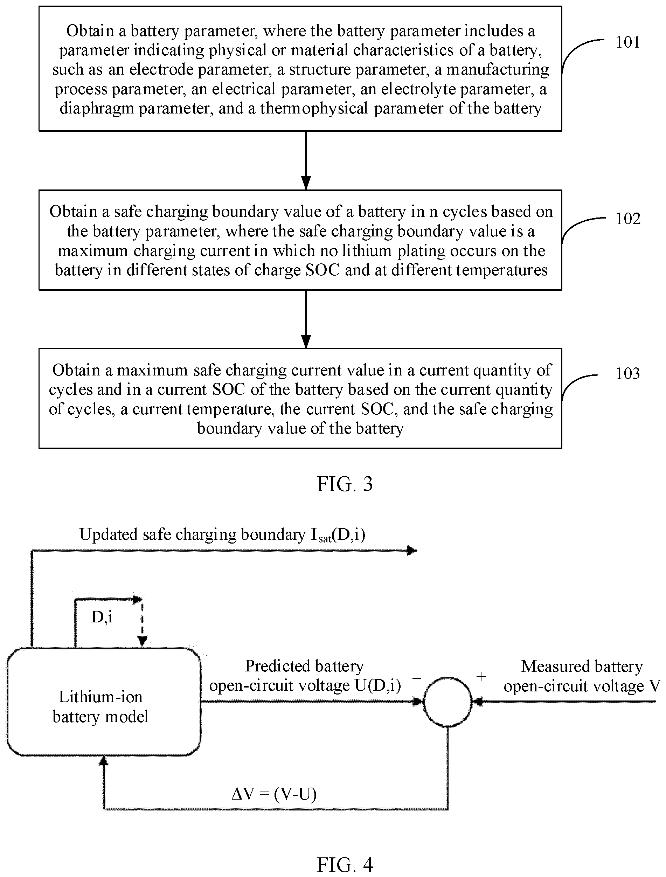

As shown in FIG. 3, a battery charging method in an embodiment of the present invention mainly includes the following steps 101, 102, and 103.

Step 101: Obtain a battery parameter, where the battery parameter includes a parameter indicating physical or material characteristics of a battery, such as an electrode parameter, a structure parameter, a manufacturing process parameter, an electrical parameter, an electrolyte parameter, a diaphragm parameter, and a thermophysical parameter of the battery.

In some embodiments of the present invention, not all types of battery parameters are required. The battery parameter obtained in step 101 may include one main battery parameter and one or more other multi-auxiliary battery parameters. For example, in subsequent model calculations using these parameters, material characteristic parameters are mainly used, and different electrode parameters in the material characteristic parameters have a relatively large impact on a model calculation result. Therefore, the battery parameter may include the electrode parameter, and the battery parameter further includes one or more of the structure parameter, the manufacturing process parameter, the electrical parameter, the electrolyte parameter, the diaphragm parameter, and the thermophysical parameter of the battery.

The electrode parameter of the battery includes one or more of activation energy, a diffusion coefficient, and first-time efficiency of the battery electrode. The activation energy is obtained through electrochemical impedance spectrum analysis of symmetric cells. The diffusion coefficient is obtained by galvanostatic intermittent titration technique (GITT). The first-time efficiency is obtained through a button cell test.

The structure parameter of the battery includes one or more parameters of a physical structure of an electrochemical cell of the battery, such as a size of the battery, a coating area, and a winding manner. The structure parameter may be obtained by disassembling the electrochemical cell and then performing measurement.

The manufacturing parameter of the battery includes one or more of parameters such as coating, weight, density, and a component proportion of the battery. The manufacturing parameter is mainly obtained by disassembling electrode plates, reverse analysis, or the like.

The electrical parameter includes a capacity, a voltage, or the like of the battery, and is mainly obtained through an electrochemical test.

The electrolyte parameter mainly includes an electrolyte formula or an electrical conductivity. The electrolyte formula is mainly determined by using gas chromatography-mass spectrometry (GC-MS). The electrical conductivity is measured by an electrical conductivity meter or electrochemical impedance spectroscopy (EIS).

The diaphragm parameter of the battery includes one or more of a porosity, an electrical conductivity, and a ratio between a resistivity of a diaphragm and a resistivity of an electrolyte (MacMullin N). The porosity is measured by using mercury intrusion porosimetry. The electrical conductivity is measured by model battery EIS. The MacMullin N is measured by using EIS.

The thermophysical parameter includes one or more of a thermal conductivity coefficient, a specific heat capacity, and a heat conduction coefficient of the battery. The thermal conductivity coefficient may be measured by using a thermal conductivity instrument (Hot-Disk). The specific heat capacity is measured by an adiabatic rate calorimeter (ARC). The heat conduction coefficient is obtained through a constant current charging and discharging measurement.

Step 102: Obtain a safe charging boundary value of the battery in n cycles based on the battery parameter. The safe charging boundary value is a maximum charging current in which no lithium plating occurs on the battery in different states of charge SOCs and at different temperatures, where n is greater than or equal to 2 and less than or equal to N, N is a cycle life of the battery, and the n cycles refer to n cycles selected from 0 to N cycles.

In step 102, a thermal-electrochemical coupled battery model represented by an ordinary differential equation is first selected, simulate an electrochemical dynamic process and a thermal dynamic process of a positive electrode, a negative electrode inside the battery and the electrolyte. Under a restriction of lithium plating of the negative electrode, a relationship between a saturation limit charging current of a fresh battery and the different temperatures and the SOCs. The fresh battery refers to a battery that is cycled for the first time, to be specific, a quantity of cycles of a battery state of health (SOH) is the first time, namely, the quantity of cycles N=1. The lithium-ion battery model represented by a series of ordinary differential equations is used as an example in which the ordinary differential equation is a John-Newman model. This type of model includes more model input parameters, and these parameters indicate physical and chemical properties of different components in the battery. Therefore, processes such as electrochemical reaction, mass transfer, charge transfer, and heat transfer inside the battery can be more accurately reflected. Therefore, the calculated safe charging boundary value is more accurate. In some embodiments of the present invention, all the battery parameters may be used as inputs into the lithium-ion battery model, to more comprehensively consider a battery status. In this way, a more accurate safe boundary and a more accurate safe charging current are obtained.

The safe charging boundary value uses lithium plating of the negative electrode as a boundary condition, and a determining condition used is that the safe boundary is reached when a difference between a solid-phase potential and a liquid-phase potential on a surface of a negative electrode active substance particle of the lithium-ion battery is equal to a potential of a lithium plating reaction. When the difference is equal to or greater than the potential of the lithium plating reaction, the lithium plating does not occur. Selection of the SOC and T may be flexibly adjusted based on precision of SOC estimation and temperature detection in hardware.

For example, simulation is performed by using software. Based on the following calculation process, a safe charging boundary of a soft pack lithium-ion battery with a capacity of 3.24 Ah in different SOCs and at different temperatures may be obtained, as shown in Table 1.

Step 1: Set an SOC initial value of the battery to 0 and an ambient temperature to T.

Step 2: Set a charging current initial value Iₛₑₜ = 0.5 C, where C represents a battery capacity, and in this example, C=3.24 Ah.

Step 3: In a current SOC, charge the battery with the set current Iₛₑₜ and maintain for a certain period of time, where the charging time is calculated by using t (unit: h) = 0.025/Iₛₑₜ (unit: C).

Step 4: Determine that in the current SOC and charging current, a difference between a solid-phase potential and a liquid-phase potential on a surface of a negative electrode active substance particle is equal to a potential of a lithium plating reaction. If yes, record a current temperature, use the SOC and the charging current as a charging boundary Iₛₐₜ (SOC, T) in the current state, increase the SOC by 0.25, and then go to the next step. If no, increase the Iₛₑₜ by 0.25 C, and then repeat step 4.

Step 5: Determine whether the current SOC is greater than 97.5%. If yes, end the calculation process. If no, return to step 2.

Step 6: Determine whether the current SOC is greater than 97.5%. If yes, end the calculation process. If no, return to step 3.

A safe charging boundary value data table of the 3.24 Ah fresh battery at different temperatures and in different SOCs shown in Table 1.1 is obtained through multiple cycles of the foregoing steps. The first column is an SOC representing a battery level, the first column is a temperature value, and other cells represent a maximum safe charging current corresponding to the SOC horizontally and the temperature longitudinally.

**Table 1.1**

| SOC | T | | | | |
|---|---|---|---|---|---|
| | 60°C | 40°C | 25°C | ... | -20°C |
| 0% | 16 | 16 | 16 | | - |
| 5% | 15.25 | 14.75 | 13.75 | | - |
| 10% | 14.75 | 13.25 | 12.75 | | - |
| 15% | 12.25 | 10.25 | 9.75 | | - |
| 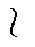 | ~ | ~ | ~ | | ~ |
| 95% | 6.25 | 4.25 | 3.75 | | - |

Then, based on the foregoing steps of obtaining safe charging boundary values of the fresh battery at different temperatures and in different SOCs, a quantity of cycles of the battery is changed to obtain the safe charging boundary value of each cycle.

The quantity of cycles of the battery may be increased in sequence, to obtain the safe boundary value in each cycle. Alternatively, safe boundary values of K or n cycles of the N cycles may be obtained, and then a function is built based on results of the K or n cycles. For example, by using an interpolation method, a least square method, a Kalman filtering method, to build a linear or nonlinear function. In this way, a safe charging boundary data table in an entire lifespan of the battery is obtained. In other words, the battery parameter of each cycle of k cycles in the n cycles is input into the lithium-ion battery model represented by the ordinary differential equation, to obtain a safe boundary value of the battery in each cycle of the k cycles. A safe boundary value of the battery in each cycle of the n cycles constitutes the safe boundary table, and k is greater than 1 and less than n. A function is built based on the safe boundary value of the battery in the k cycles, and a safe boundary value of the battery in each cycle other than the k cycles in the n cycles is obtained based on the function. In this way, the safe boundary table is obtained. Table 1.2 below is a safe charging boundary table for all cycles. The safe charging boundary table is mainly obtained after data processing is performed by using a data processing module of a terminal in which the battery is located, and then the safe charging boundary table is stored in a storage module of the terminal.

**Table 1.2**

| Quantity of cycles (N) | SOC | T | | | | |
|---|---|---|---|---|---|---|
| | | 60°C | 40°C | 25°C | ... | -20°C |
| 1 | 0% | 16 | 16 | 16 | | - |
| | 5% | 15.25 | 14.75 | 13.75 | | - |
| | 10% | 14.75 | 13.25 | 12.75 | | - |
| | 15% | 12.25 | 10.25 | 9.75 | | - |
| | 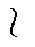 | ~ | ~ | ~ | | ~ |
| | 95% | 6.25 | 4.25 | 3.75 | | - |
| ⋮ | | | | | | |
| 600 | 0% | 11.2 | 12.8 | 14.4 | | - |
| | 5% | 10.66 | 11.8 | 12.37 | | - |
| | 10% | 10.32 | 10.6 | 11.47 | | - |
| | 15% | 8.58 | 8.2 | 8.78 | | - |
| | 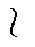 | ~ | ~ | ~ | | ~ |
| | 95% | 4.37 | 3.4 | 3.37 | | - |

For example, it is assumed that after the 3.24 Ah soft pack battery is cycled for 600 times, the battery is completely aged (in other words, the state of health SOH = 0). In this case, the foregoing process may be used to calculate a cycle status of some of the 600 times. For example, safe charging boundary values when the SOH = 0, 0.25, 0.5 and 0.75 are calculated, where SOH =1 - N / 600, and N indicates a current quantity of cycles of the battery.

For example, a battery linear attenuation function Iₛₐₜ (X, SOC, T) = a ·X + b is obtained based on the safe boundary value of the battery in the k cycles by using the interpolation method. Coefficients a and b are calculated by substituting safe boundary values of any two cycles in the k cycles into the function, and X is the quantity of cycles of the battery. Then, the safe boundary value of the battery in each cycle other than the k cycles in the n cycles is obtained based on the linear attenuation function of the battery. Generally, in a normal use environment and a normal temperature, the battery is in linear attenuation. Only in some special environments, for example, an environment in which a temperature is extremely low or extremely high, such as below minus 10 degrees or above 50 degrees, the battery is in non-linear attenuation.

Another example is used herein to describe how to establish a function relationship between an external feature and an internal key parameter of the battery by using the model when a battery attenuation mode is non-linear and the safe charging boundary of each cycle is not calculated by using the model, then a safe charging boundary in the entire cycle is obtained by using the Kalman filtering method. As shown in FIG. 4, when the battery attenuation mode is non-linear, a process of obtaining the safe charging boundary table in all the cycles includes the following steps.

Step 1: Establish a function relationship between a key model parameter and an open-circuit voltage OCV and a safe charging boundary of a battery at a temperature T1 by using a function model. In other words, U (Ds, i) and Iₛₐₜ (Ds, i), where U represents the open-circuit voltage, Ds and i are parameters in the input model.

Step 2: Obtain a predicted initial open-circuit voltage U in a current SOC by using a function relationship established based on the model. Then, obtain an actually measured open-circuit voltage Uxy in different SOCs in different quantities of cycles by testing the battery at the temperature T1, where x indicates the different quantities of cycles, and y is used to identify the different SOCs. For example, an open-circuit voltage in the fifth cycle is U5y.

Step 3: When it is required to obtain a safe charging boundary value of the battery in a fixed SOC and in a quantity k of cycles, the method is as follows: First, compare the initial open-circuit voltage U with a measured open-circuit voltage V in the quantity k of cycles by using a Kalman filtering method. Continuously change variables Ds and i in the function U(Ds, i) to minimize a difference between U and Uky. In this way, the current quantity k of cycles, and Ds and i in the current SOC are obtained. Then, substitute Ds and i into the established function relationship Iₛₐₜ (Ds, i) to obtain a current quantity k of cycles and the safe charging boundary value Iₛₐₜ in the current SOC.

Step 4: Continuously change the SOC, and repeat step 3 to finally obtain a safe charging boundary value in an entire SOC range at the temperature T1 and in the quantity k of cycles.

Step 5: Continuously change the quantity k of cycles, and repeat steps 3 and 4 to obtain safe charging boundary values in the different SOCs at the temperature T1 in the entire cycle.

Step 6: Change the temperature T1 and repeat steps 3, 4, and 5 to obtain different temperatures, different quantities of cycles, and the safe charging boundary values in the different SOCs, as shown in Table 1.2.

Step 103: Obtain a maximum safe charging current value in a current quantity of cycles and in a current SOC of the battery based on the current quantity of cycles, a current temperature, the current SOC, and the safe charging boundary value of the battery. The maximum safe charging current value refers to a maximum charging current value in which no lithium plating occurs in the current quantity of cycles and in the current SOC of the battery.

A maximum charging current applicable to the battery in different SOCs and at different temperatures of the battery in the current quantity of cycles of the battery is obtained based on the current quantity of cycles of the battery and the safe boundary value. A fast charging policy of the battery is determined, where the fast charging policy includes an SOC corresponding to each time period in a current charging cycle and the applicable maximum charging current.

In another embodiment of the present invention, a status obtaining module in the battery management unit first obtains a current battery state of charge SOC value and an aging degree related to a current battery SOH, namely, a quantity of cycles that has been cycled. The status obtaining module obtains a status parameter of a battery by using a temperature sensor or the like, and reads other status parameters related to the battery from a storage module of the terminal.

Then, based on the currently obtained status parameter of the battery, safe charging boundary data under a corresponding condition in a safe charging boundary table is read from the storage module of the terminal.

The data processing module selects an appropriate charging specification based on the read safe charging boundary data and a safe charging boundary current value in the safe charging boundary data, and sends a command to a charging apparatus to charge the battery according to the charging specification. A method for selecting the charging specification based on the boundary current includes but is not limited to: (1) charging directly based on the boundary current, or (2) charging with a current that is less than the boundary current by a certain difference or a current of a certain proportion of the boundary current, or (3) charging with a current that is infinitely approximate the boundary current by using a mathematical algorithm based on hardware control precision.

In some embodiments of this application, a charging target function may be built, a safe charging boundary in a current state is used as a current filtering condition, and a charging specification is formulated by optimizing the target function. A specific principle is as follows:
First, the target function that uses a charging time and a growth rate of a negative electrode SEI film as objects is built. A larger charging current indicates a shorter charging time, but the growth rate of the SEI film increases correspondingly. In other words, aging of a battery is accelerated, and a battery life is shortened. Therefore, an optimal charging current needs to be found with consideration of fast charging and the battery life.

Then, a current temperature, a current quantity of cycles, and a current SOC of the battery are obtained by using related hardware and software, to obtain the safe charging boundary in the current state based on these battery status parameters. The safe charging boundary is a maximum charging current value while ensuring safety.

Then, a dynamic planning algorithm is used, for example, the maximum current value is decreased in sequence in the obtained safe charging boundary according to a specific rule, and then the decreased maximum current value is substituted into the target function to check whether a value of the target function is the smallest. If the value of the target function is the smallest, the current current is used for charging, to ensure that a charging speed is fast and the growth rate of the negative electrode SEI film is slow. For example, a target function f (tcha·δSEI) is first built by using the charging time and the growth rate of the negative electrode SEI film as objects. tcha represents a charging time required for charging the battery to a next SOC phase at different charging currents, at the current temperature, in the current SOC, and in the current quantity of cycles. δSEI represents a growth rate of the negative electrode SEI film at the different charging currents, at the current temperature, in the SOC, and in the current quantity of cycles. The dynamic planning algorithm is used to optimize the target function, so that the value of the target function is the smallest within the safe charging boundary to formulate the charging specififcation.

A value of the charging current I is a current value that enables min [h()·()] to be a minimum value, and meets 0 < I < Iₛₐₜ. Because when the charging current increases, the charging time tcha decreases, but the growth rate of the negative electrode SEI film δSEI increases. Therefore, a relationship between the charging time and the current is exactly opposite to a relationship between the growth rate and the current. Therefore, an optimal condition is that a product of the two is the smallest. In this case, the charging current not only ensures the charging speed, but also ensures the battery life, which is an optimal charging specififcation.

The method is:
Step 1: Check a maximum safe charging boundary of the battery in the current state.
Step 2: Set 0 < IJ < Iₛₐₜ(SOC) , where Iₛₐₜ(SOC) is the maximum safe charging current value in a current aging status, at the current temperature, and in the current SOC, J = 1, 2, ..., N, and is a quantity of target function optimization.
Step 3: Determine whether a formula (J)=min [h(J)·(J)] is true, to be specific, whether the charging current value I can enable the function to be a minimum value. h(J) is a charging time at a Jth charging current in the current state of the battery, and (J) is a growth rate of the negative electrode SEI film at the Jth charging current in the current state of the battery. If yes, add 1 to J and return to step 2. If no, go to step 4.
Step 4: Check whether the SOC is 1. If yes, the optimization is complete. If no, return to step 1.

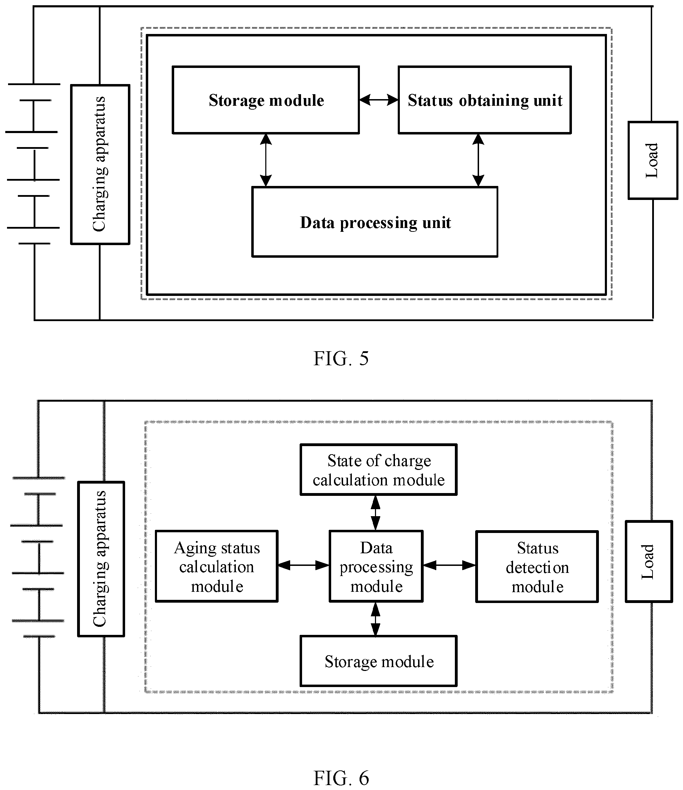

As shown in FIG. 5, a battery management unit of a terminal includes a status obtaining module, a data processing module, and a data storage module.

The status obtaining module is configured to obtain a battery parameter of the battery, a current quantity of cycles of the battery, a cycle life of the battery, and a state of charge SOC of the battery. The parameter further includes one or more of an electrode parameter, a structure parameter, a manufacturing process parameter, an electrical parameter, an electrolyte parameter, a diaphragm parameter, and a thermophysical parameter of the battery.

The data processing module is configured to obtain a safe charging boundary value of the battery in n cycles based on the battery parameter. The safe charging boundary value includes a maximum charging current in which no lithium plating occurs on the battery in different SOCs and at different temperatures, where n is greater than or equal to 0 and less than or equal to N, N is the cycle life of the battery, and the n cycles refer to n cycles selected from 0 to N cycles. Then, the data processing module obtains a maximum safe charging current in the current quantity of cycles and in a current SOC of the battery based on the current quantity of cycles, a current temperature, the current SOC, and the safe charging boundary value of the battery. The maximum safe charging current value refers to a maximum charging current value in which no lithium plating occurs in the current quantity of cycles and in the current SOC of the battery.

The data storage module is configured to store a safe charging boundary table that includes the battery parameter and the safe charging boundary value. It may be understood that the safe charging boundary table is only a manner of indicating safe charging boundary values such as a battery temperature, a quantity of cycles (SOH), a battery capacity (SOC), and the maximum safe charging current, but is not limited to a form of table, and may be another information indication manner such as a data frame, a byte, a message, a data stream, and a data packet.

As shown in FIG. 6, the status obtaining module may further include a state of charge calculation module, an aging status calculation module, and a status detection module. The status detection module is configured to detect a battery voltage, a battery charge/discharge current, and a device temperature parameter signal of the battery and the terminal device, and may store a detection result in the storage module for the data processing module to read. The state of charge calculation module is configured to estimate the current SOC of the battery by using an SOC calculation chip, and store a result in the storage module for the data processing module to read. The aging status determining module is configured to obtain the current quantity of cycles of the battery, and store a result in the data storage module for the data processing module to read.

The data processing module is configured to input a battery parameter of each cycle of k cycles in the n cycles is into a lithium-ion battery model represented by an ordinary differential equation, to obtain a safe boundary value of the battery in each cycle of the k cycles. The safe boundary value in each cycle of the n cycles constitutes a safe boundary table, and k is greater than 1 and less than n. A function is built based on the safe boundary value of the battery in the k cycles, and a safe boundary value of the battery in each cycle other than the k cycles in the n cycles is obtained based on the function. In this way, the safe boundary table is obtained.

The data processing module is configured to obtain coefficients a and b of a battery linear attenuation function Iₛₐₜ (X, SOC, T) = a ·X + b by using an interpolation method based on the safety boundary value of the battery in the k cycles, where X is a quantity of cycles of the battery. Then, the safe boundary value of the battery in each cycle other than the k cycles in the n cycles is obtained based on the linear attenuation function of the battery.

The data processing module is configured to input the battery parameter of each cycle of the n cycles into the lithium-ion battery model represented by the ordinary differential equation, to obtain the safe boundary value of the battery in each cycle of the n cycles, to obtain the safe boundary value, in other words, the safe boundary value of the battery in each cycle of the n cycles.

The obtained battery parameter includes one or more of the structure parameter, the manufacturing process parameter, the electrical parameter, the electrolyte parameter, the diaphragm parameter, and the thermophysical parameter of the battery.

The data processing module is configured to obtain a safe charging boundary table of the battery in each cycle of N cycles based on the battery parameter, where N is equal to n.

The data processing module is configured to: determine a maximum charging current applicable to the battery in the different SOCs and at the different temperatures of the battery based on the current quantity of cycles of the battery and the safe boundary table. Then, the data processing module determines a fast charging policy of the battery based on the current SOC of the battery and the maximum charging current applicable to the battery in the different SOCs and at the different temperatures of the battery. The fast charging policy includes an SOC corresponding to each time period in a current charging cycle and the applicable maximum charging current value.

It can be learned that in this embodiment of the present invention, a status parameter of the battery such as the current temperature, the state of charge SOC, and the quantity of cycles is monitored in real time. A corresponding boundary current is extracted from the safe charging boundary data table based on the status parameter, and an appropriate charging specification is selected based on the safe boundary current value to perform charging. This resolves a conflict among battery fast charging, battery aging, and safety, delays battery aging and improves a fast charging speed while ensuring the battery safety.

It may be clearly understood by a person skilled in the art that for the purpose of convenient and brief description, for a detailed working process of the described system, apparatus, and unit, refer to a corresponding process in the foregoing method embodiments.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A battery charging method, comprising:
obtaining a battery parameter, wherein the battery parameter comprises an electrode parameter of a battery, and the parameter further comprises one or more of a structure parameter, a manufacturing process parameter, an electrical parameter, an electrolyte parameter, a diaphragm parameter, and a thermophysical parameter of the battery;
obtaining, based on the battery parameter, a safe charging boundary value of the battery in n cycles, wherein the safe charging boundary value is a maximum charging current in which no lithium plating occurs on the battery in different states of charge SOCs and at different temperatures, wherein n is greater than or equal to 2 and less than or equal to N, N is a cycle life of the battery, and the n cycles refer to n cycles selected from 0 to N cycles; and
obtaining a maximum safe charging current value in a current quantity of cycles and in a current SOC of the battery based on the current quantity of cycles, a current temperature, the current SOC, and the safe charging boundary value of the battery, wherein the maximum safe charging current value refers to a maximum charging current value in which no lithium plating occurs in the current quantity of cycles and in the current SOC of the battery.

2. The battery charging method according to claim 1, wherein the obtaining, based on the battery parameter, a safe charging boundary value of the battery in n cycles comprises:
inputting the battery parameter of each cycle of k cycles in the n cycles into a lithium-ion battery model represented by an ordinary differential equation, to obtain a safe boundary value of the battery in each cycle of the k cycles, wherein k is greater than or equal to 2 and less than or equal to n; and
building a function based on the safe boundary value of the battery in the k cycles, and obtaining, based on the function, a safe boundary value of the battery in each cycle other than the k cycles in the n cycles.

3. The battery charging method according to claim 2, wherein the building a function based on the safe boundary value of the battery in the k cycles, and obtaining, based on the function, a safe boundary value of the battery in each cycle other than the k cycles in the n cycles comprises:
obtaining, based on the safe boundary value of the battery in the k cycles, a linear attenuation function Iₛₐₜ (X, SOC, T) = a ·X + b of the battery by using an interpolation method, and then obtaining, based on the linear attenuation function of the battery, the safe boundary value of the battery in each cycle other than the k cycles in the n cycles, wherein coefficients a and b are calculated by using the interpolation method, X is a quantity of cycles of the battery, Iₛₐₜ is a maximum charging current value in which no lithium plating occurs, and T is the temperature of the battery.

4. The battery charging method according to claim 1, wherein the obtaining, based on the battery parameter, a safe charging boundary value of the battery in n cycles comprises:
inputting the battery parameter of each cycle of the n cycles into a lithium-ion battery model represented by an ordinary differential equation, to obtain a safe boundary value of the battery in each cycle of the n cycles, to obtain the safe boundary value.

5. The battery charging method according to any one of claims 1 to 4, wherein the obtaining a battery parameter comprises: obtaining all battery parameters in the electrode parameter, the structure parameter, the manufacturing process parameter, the electrical parameter, the electrolyte parameter, the diaphragm parameter, and the thermophysical parameter; and
obtaining, based on all the battery parameters, a safe charging boundary value of the battery in each cycle of N cycles, wherein N is equal to n.

6. The battery charging method according to any one of claims 1 to 4, further comprising:
obtaining, based on the current quantity of cycles of the battery and the safe boundary value, a maximum charging current applicable to the battery in different SOCs and at different temperatures of the battery in the current quantity of cycles of the battery, and determining a fast charging policy of the battery, wherein the fast charging policy comprises an SOC corresponding to each time period in a current charging cycle and the applicable maximum charging current.

7. A terminal, comprising a battery, a charging circuit, and a battery management unit, wherein the battery management unit is configured to control the charging circuit to charge the battery, and the battery management unit comprises:
a status obtaining module, configured to obtain a battery parameter of the battery, a current quantity of cycles of the battery, a cycle life of the battery, and a state of charge SOC of the battery, wherein the parameter further comprises one or more of a structure parameter, a manufacturing process parameter, an electrical parameter, an electrolyte parameter, a diaphragm parameter, and a thermophysical parameter of the battery; and
a data processing module, configured to obtain, based on the battery parameter, a safe charging boundary value of the battery in n cycles, wherein the safe charging boundary value comprises a maximum charging current in which no lithium plating occurs on the battery in different SOCs and at different temperatures, wherein n is greater than or equal to 2 and less than or equal to N, N is the cycle life of the battery, and the n cycles refer to n cycles selected from 0 to N cycles, and obtain a maximum safe charging current in the current quantity of cycles and in a current SOC of the battery based on the current quantity of cycles, a current temperature, the current SOC, and the safe charging boundary value of the battery, wherein the maximum safe charging current value refers to a maximum charging current value in which no lithium plating occurs in the current quantity of cycles and in the current SOC of the battery.

8. The charging terminal according to claim 7, wherein the data processing module is configured to input the battery parameter of each cycle of k cycles in the n cycles into a lithium-ion battery model represented by an ordinary differential equation, to obtain a safe boundary value of the battery in each cycle of the k cycles, wherein k is greater than or equal to 2 and less than or equal to n; and build a function based on the safe boundary value of the battery in the k cycles, and obtain, based on the function, a safe boundary value of the battery in each cycle other than the k cycles in the n cycles.

9. The terminal according to claim 8, wherein the data processing module is configured to obtain, based on the safe boundary value of the battery in the k cycles, a linear attenuation function Iₛₐₜ (X, SOC, T) = a ·X + b of the battery by using an interpolation method, and obtain, based on the linear attenuation function of the battery, the safe boundary value in each cycle other than the k cycles in the n cycles, wherein coefficients a and b are calculated by using the interpolation, X is a quantity of cycles of the battery, Iₛₐₜ is a maximum charging current value in which no lithium plating occurs, and T is the temperature of the battery.

10. The terminal according to claim 7, wherein the data processing module is configured to input the battery parameter of each cycle of the n cycles into a lithium-ion battery model represented by an ordinary differential equation, to obtain a safe boundary value of the battery in each cycle of the n cycles, to obtain the safe boundary value, in other words, the safe boundary value of the battery in each cycle of the n cycles.

11. The terminal according to any one of claims 7 to 10, wherein the obtaining a battery parameter comprises: obtaining all battery parameters in the electrode parameter, the structure parameter, the manufacturing process parameter, the electrical parameter, the electrolyte parameter, the diaphragm parameter, and the thermophysical parameter; and
the data processing module is configured to obtain, based on all the battery parameters, a safe charging boundary table of the battery in each cycle of N cycles, wherein N is equal to n.

12. The terminal according to any one of claims 7 to 10, wherein the data processing module is configured to obtain, based on the current quantity of cycles of the battery and the safe boundary value, a maximum charging current applicable to the battery in different SOCs and at different temperatures of the battery in the current quantity of cycles of the battery, and determine a fast charging policy of the battery, wherein the fast charging policy comprises an SOC corresponding to each time period in a current charging cycle and the applicable maximum charging current.
